# EUROPÄISCHE PATENTSCHRIFT

(11) **EP 2 273 639 B1**
(45) Veröffentlichungstag und Bekanntmachung des Hinweises auf die Patenterteilung: **24.04.2019**
(21) Anmeldenummer: 10006177.9
(22) Anmeldetag: 15.06.2010
(51) Int. Cl.: H02G 3/22, H02G 3/08, H02G 3/12, H02G 3/04

(54) **Elektrische Installationsdose**
Electric installation socket
Boîtier d'installation électrique

(30) Priorität: 09.07.2009 DE 102009032451; 20.11.2009 DE 102009053892
(43) Veröffentlichungstag der Anmeldung: 12.01.2011
(73) Patentinhaber: Kaiser GmbH & Co. KG, 58579 Schalksmuehle (DE)
(72) Erfinder: Schlegel, Torsten, 58515 Lüdenscheid (DE); Kaiser, Burkard, 58509 Lüdenscheid (DE)
(74) Vertreter: Köchling, Conrad-Joachim

(56) Entgegenhaltungen:
- EP-A2- 1 108 936
- DE-A1-102007 008 234
- GB-A- 2 260 452
- GB-A- 2 334 770

## Beschreibung

Die Erfindung betrifft eine elektrische Installationsdose oder Hohlwanddose zum Einbau in Wände, vorzugsweise feuerhemmende Wände, insbesondere F-90 Wände, wobei die Wand eine passende Lochung zum Einsatz der Dose aufweist, die Dose mündungsseitig vorzugsweise einen Flanschrand aufweist, der in Montagesolllage außen an der Wand anliegt, sowie Befestigungsmittel zur Fixierung an der Wand in Montagesolllage, mit den Merkmalen des Oberbegriffs des Anspruches 1.

Hohlwanddosen sind beispielsweise aus der DE 20 2006 003 356 U bekannt. Hohlwanddosen werden in entsprechende Lochungen einer Hohlwand eingebaut, um eine elektrische Verdrahtung mit in die Hohlwanddose eingesetzten Installationselementen zu ermöglichen.

Sie werden beispielsweise von Trockenbauunternehmen und Elektrikern verwendet. Diese haben geeignete Werkzeuge, um in der Brandschutzwand oder Hohlwand entsprechende Lochungen ausbilden zu können, in die eine solche Hohlwanddose einsetzbar ist.

Solche Hohlwanddosen sind nicht geeignet um Leitungsdurchführungen durch mehrschichtige Hohlwände oder eine Leitungseinführung in den Raum hinter einer Hohlwand zu bilden.

Um eine oder mehrere Leitungen oder auch Installationsrohre durch eine feuerhemmende Hohlwand zu führen oder in den Zwischenraum zwischen solchen Hohlwänden einzuführen, ist es bekannt, in die Hohlwand große, vornehmlich rechteckige Ausnehmungen einzubringen, in die dann ein entsprechender Installationskasten eingesetzt wird. Dieser Installationskasten dient zur Durchführung von Leitungen. Um eine branddichte oder zumindest rauchgasdichte Anordnung zu schaffen, werden dann nach dem Verlegen der Rohre oder Kabel Brandschutzkissen in den Hohlraum eingebracht, die den verbleibenden Freiraum füllen. Alternativ ist es auch bekannt, Brandschutzsteine einzusetzen, wobei diese entsprechende Lochungen für die Durchführung von Kabeln oder Kabelbündeln aufweisen müssen. Auch ist es bekannt, Brandschutzmanschetten vorzusehen, die in den Wandungsdurchbruch eingebracht werden und von Leitungen durchgriffen sind. Sämtliche dieser Ausbildungen erfordern einen großen handwerklichen Aufwand, wobei insbesondere zur Ausbildung der entsprechenden Durchbrüche nicht die üblichen Werkzeuge eingesetzt werden können, die der Elektriker oder Trockenbauer ohnehin zur Anbringung von Hohlwanddosen zur Verfügung hat, sondern es müssen gesonderte Werkzeuge eingesetzt werden und der möglicherweise in der Installation ungeübte Fachmann muss einen erheblichen Aufwand betreiben, um einen solchen Wanddurchlass oder - einlass rauchgasdicht auszubilden.

Aus der GB 2 260 452 A ist eine Installationsdose aus dem Oberbegriff des Anspruches 1 angegebenen Art bekannt.

Bei dieser bekannten Installationsdose ist eine bodenlose Hülse vorgesehen, die einstückig ausgebildet ist und in eine entsprechende Öffnung einer Wand, insbesondere einer Hohlwand eingesetzt werden kann, wobei dieses Teil mittels geeigneter Befestigungsmittel in der Sollposition fixiert werden kann.

Zusätzlich ist ein zweiteiliges Ergänzungsteil vorgesehen, dessen Teile in der Montagesolllage miteinander verriegelbar sind. Dieses Ergänzungsteil weist einen mittigen Durchbruch auf, in welchem Teile aus elastischem deformierbaren Material eingesetzt sind. Das Ergänzungsteil kann nach der Installation der einstückigen Hülse, die von Kabeln oder dergleichen durchgriffen ist, auf die Kabel aufgesetzt werden und in die Hülse eingeschoben werden, wobei die elastisch verformbaren Bestandteile sich an den Mantel der durchgeführten Kabel anpassen können. Zur Fixierung des Ergänzungsteils ist einerseits in der Hülse ein Wegbegrenzungsanschlag für das Ergänzungsteil vorgesehen und des Weiteren sind Schraubbolzen vorgesehen, mittels derer das Ergänzungsteil an Bestandteilen der Hülse fixiert werden kann.

Aus der DE 10 2007 008 234 A1 ist eine Vorrichtung für die Verlegung von Kabeln bekannt, wobei ein rohrförmiger Grundkörper vorgesehen ist, an dessen Mündung ein Deckel befestigt ist, der aus zwei Teilen besteht, sodass der Deckel in eine Öffnungslage und eine Schließlage verschwenkt werden kann.

Aus der GB 2 334 770 A ist ein hülsenartiger Kragen bekannt, der aus zwei zueinander schwenkbar verbindbaren Teilen besteht, sodass dieser Kragen in eine Öffnungssituation verbracht werden kann, sodass er beispielsweise auf ein durchgeführtes Kabel aufgebracht werden kann und anschließend in eine Schließlage verbracht wird, in der das Kabel oder dergleichen umfasst ist. Hierbei sind die den Kragen bildenden Teile beispielsweise aus Stahl gefertigt. Die Innenseite dieser den Kragen bildenden Teile sind mit einer dünnen Schicht aus intumeszierendem Material versehen, sodass hierdurch eine Feuerbarriere gebildet werden soll.

Aus der EP 1 108 936 A2 ist eine Brandschutzmanschette für Rohre oder dergleichen bekannt, die aus einem rohrförmigen Gehäuse aus Metall besteht, dass an einem Ende einen Anschlussflansch aufweist, wobei ein axialer Endabschnitt des metallischen Gehäuses eine Einlage aus intumeszierenden Material aufweist, wobei ein Durchführungsbereich für Rohre oder Kabel gebildet ist.

Ausgehend von diesem Stand der Technik liegt der Erfindung die Aufgabe zugrunde, eine Dose gattungsgemäßer Art zu schaffen, die herkömmlich in einfacher Weise durch Trockenbauer oder Elektriker mit üblichen Werkzeugen installiert werden kann, also die entsprechende Lochung in der Wand mit den zur Verfügung stehenden Werkzeugen gebildet werden kann und die zur Durchführung von Langformteilen, wie Kabeln, Kabelbündeln oder Installationsrohren geeignet ist, wobei eine rauchgasdichte Installationsanordnung erreicht werden soll und eine Abschottung des Durchgangshohlraumes im Falle eines auftretenden Brandes bewirkt werden soll.

Zur Lösung dieser Aufgabe schlägt die Erfindung vor, dass die Hülse aus intumeszierendem Material besteht, dass die Hülse längsgeteilt ist, dass die durch die Längsteilung gebildeten Teile der Hülse an ihren Kanten Vorsprünge oder Vertiefungen oder Teile, die zur steckbaren, rastbaren oder schubverbindbaren Verbindung der Teile geeignet sind, aufweist, dass das Ergänzungsteil axial vom Flanschrand abragt oder über den Flanschrand vorragt, dass die Hülse einen vom Flanschrand abragenden Stutzen aufweist, auf den das Ergänzungsteil aufsteckbar oder aufgesteckt ist, dass am Stutzen und an mit diesem zusammenwirkenden Teilen des Ergänzungsteils einen bei Bajonettverschluss bildende Teile, nämlich Zapfen und Führungssowie Haltenuten ausgebildet sind, und dass die Dichtelemente, Dichtkörper, Dichtlamellen oder Dichtlippen aus schwer entflammbarem oder nicht brennbarem Werkstoff bestehen.

Durch diese Ausgestaltung ist dem Handwerker ein Installationselement zur Verfügung gestellt, welches er unter Verwendung der für den Elektriker und/oder Trockenbauer üblichen Werkzeuge installieren kann, weil er die gleichen Werkzeuge einsetzen kann, die zum Einbau von Hohlwanddosen üblich und notwendig sind. Für die Installation wird also mit diesen Werkzeugen ein entsprechendes Loch in die Wandung eingebracht, in welches dann die bodenlose Hülse eingesetzt werden kann. Die bodenlose Hülse kann dazu genutzt werden, entsprechende Leitungen, Kabel oder Rohre durch die Wand zu führen oder hinter die Wand zu führen.

Die Hülse besteht aus intumeszierendem Material.

Vorzugsweise ist vorgesehen, dass die Dichtmasse, insbesondere die aus Dichtmasse bestehende Platte, aus intumeszierendem Material besteht.

In an sich bekannter Weise weist die Hülse an ihrem ersten Ende einen Flanschrand auf. Durch diesen Flanschrand wird eine Montagehilfe, also eine Einstecktiefenbegrenzung erreicht, da in der Montagesolllage der Flanschrand sich an die Außenseite der Wandung im Bereich des Wandungsdurchbruches anlegt. Die Hülse kann auch in üblicher Weise mit Befestigungsmitteln an der Wand fixiert werden, wobei die gleichen Befestigungsmittel eingesetzt werden können, die bei der Befestigung von Hohlwanddosen oder Installationsdosen benötigt und benutzt werden. Zudem ist vorzugsweise vorgesehen, dass die Hülse längsgeteilt ist.

Durch die Längsteilung der Hülse ist es möglich, diese zunächst als offene Schale, beispielsweise Halbschale zur Verfügung zu stellen, so dass Kabel eingelegt werden können. Anschließend können die anderen Teile der Hülse aufgelegt werden und auch die Platte in die so gebildete Hülse eingebracht werden. Die so gebildete Hülse kann dann in die entsprechende Lochung der Wandung eingeschoben werden. Die Hülse stützt sich dann an der Lochlaibung der Wandung ab, wodurch der Zusammenhalt der Teile im Zusammenwirken mit der in der Hülse angeordneten Platte gewährleistet ist.

Auch ist vorgesehen, dass die durch die Längsteilung gebildeten Teile der Hülse an ihren Kanten Vorsprünge, Vertiefungen oder dergleichen zur steckbaren, rastbaren oder schubverbindbaren Verbindung der Teile geeignete Teile aufweist.

Durch diese Ausbildung ist eine passgenaue Zuführung der Einzelteile der Hülse gewährleistet, wobei gegebenenfalls bei rastbaren oder schubverbindbaren Teilen auch ein selbsthaltender Zusammenhalt der Teile gewährleistet ist, bevor diese in die entsprechende Lochung der Wandung eingeschoben sind.

Um bei der erfindungsgemäßen Gestaltung eine besonders einfach gestaltete und einfach zu handhabende rauchgasdichte Anordnung zu ermöglichen, weist die Hülse mündungsseitig ein axial vom Flanschrand abragendes oder über den Flanschrand vorragendes Ergänzungsteil auf, mittels dessen durch die Hülse geführte Kabel oder dergleichen Teile rauchgasdicht umfasst sind.

Bei einer solchen Ausgestaltung besteht die Hülse aus intumeszierendem Material. Unabhängig von der Gestaltung der Hülse ist das axial vom Flanschrand abragende oder über den Flanschrand vorragende Ergänzungsteil vorgesehen,
welches nach erfolgter Installation die durch die Hülse geführten Kabel oder auch Rohre rauchgasdicht umfasst. Sofern bei einer solchen installierten Hülse im Bereich hinter der Wand, in welche die Hülse eingesetzt ist, also auf der dem Flanschrand abgewandten Seite der Hülse, ein Brandfall eintritt, so können Rauchgase nicht durch die Hülse austreten, da die durch die Hülse geführten Kabel und dergleichen durch das Ergänzungsteil rauchgasdicht umfasst sind. Bei stärkerer Brandeinwirkung bläht dann das intumeszierende Material auf und dichtet im Bereich der Hülse den Bereich zwischen der Lochwandung des Loches, in welches die Hülse eingesetzt ist, und den durchgeführten Kabeln vollständig ab, so dass auch ein Branddurchtritt verhindert wird.

Auch ist vorgesehen, dass das Ergänzungsteil lösbar an der Hülse befestigt ist.

Gemäß dieser Ausbildung kann bei der Installation zunächst die Durchführung der Kabel durch die Hülse erfolgen, bevor dann anschließend das Ergänzungsteil zum Zwecke der Rauchgasabdichtung aufgesetzt und an der Hülse befestigt wird.

Um die Installation weiter zu vereinfachen, weist die Hülse einen vom Flanschrand
abragenden Stutzen aufweist, auf den das Ergänzungsteil aufsteckbar oder aufgesteckt ist.

Hierdurch wird die Zusammenführung der Teile gefördert und die Installation weiterhin vereinfacht.

Eine besonders einfache Art und Weise des Zusammenbaus der Teile wird dadurch erreicht, dass am Stutzen und an mit diesem zusammenwirkenden Teilen des Ergänzungsteils einen Bajonettverschluss bildende Teile, nämlich Zapfen und Führungs- sowie Haltenuten ausgebildet sind.

Zudem ist auch das Ergänzungsteil längs geteilt.

Die längs geteilte Hülse und deren Vorteile sind oben schon beschrieben. Dadurch, dass auch das Ergänzungsteil längs geteilt ist, wird die Installation weiterhin vereinfacht, da nach der Installation der Hülse, die von Kabeln oder dergleichen durchgriffen ist, das Ergänzungsteil bzw. dessen durch Längsteilung gebildete Teile radial auf den Kabelstrang oder dergleichen aufgesetzt und aneinander befestigt werden können und nachfolgend mit der Hülse verbunden werden können, so dass die funktionsfähige fertige Einheit zur Verfügung gestellt ist.

Insbesondere ist dabei vorgesehen, dass die durch die Längsteilung gebildeten Einzelteile des Ergänzungsteils miteinander lösbar verriegelbar oder verriegelt sind.

Dazu sind an den einander gegenüberliegenden Randkanten der Einzelteile Verriegelungs- oder Verrastkonturen bzw. Riegel oder Rasten vorgesehen sein, so dass die Teile radial zusammengesetzt und in der Montagesollposition untereinander verriegelt sind.

Insbesondere ist das Ergänzungsteil ein rohrähnliches Formteil aus im Wesentlichen formstabilem Werkstoff, insbesondere Kunststoff ist, in dessen Innenraum elastische Dichtelemente angeordnet oder am Innenmantel angeformt sind, die den Querschnitt des Formteiles dichtend verschließen.

Dadurch, dass das Ergänzungsteil ein rohrähnliches Formteil aus formstabilem Werkstoff ist, ist dessen Handhabung und Montage sowie Befestigung an der Hülse in einfacher Weise zu realisieren. Durch die im Innenraum angeordneten elastischen Dichtelemente wird die Rauchgasabdichtung erreicht, da die durchgeführten Kabel oder dergleichen von diesen Dichtelementen umfasst sind und die Dichtelemente sich gut an den Mantel der Kabel anpassen, so dass die gewünschte Rauchgasdichtheit erreicht wird.

Besonders bevorzugt besteht das Ergänzungsteil aus zwei halbschalenartigen Rohrabschnitten, die zu einem rohrartigen Formteil zusammensetzbar oder zusammengefügt sind, wobei jeder halbschalenartige Rohrabschnitt innenliegend elastische Dichtelemente aufweist, die sich bei zusammengefügten Rohrabschnitten zu einer Dichtscheibe ergänzen.

Auch kann das Ergänzungsteil innenliegend angeformte Dichtlippen oder kammartige Dichtlamellen aufweisen.

Des Weiteren kann das Ergänzungsteil innenliegend mindestens einen, vorzugsweise radial geteilten elastisch verformbaren Dichtkörper umfassen, der in Montagesolllage unverlierbar am Ergänzungsteil gehalten ist.

Insbesondere bei dem längs geteilten Ergänzungsteil ist ein solcher geteilter Dichtkörper vorteilhaft, da vor dem Zusammenbau in jedem der beiden das Ergänzungsteil bildenden Teile eine entsprechende Hälfte des Dichtkörpers angebracht sein kann, wobei in der Montagesolllage die Einzelteile das Ergänzungsteil bilden und der Dichtkörper eine komplette Querschnittsabdichtung des Ergänzungsteils bewirkt. Durch die Elastizität des Dichtkörpers ist sichergestellt, dass dieser sich an durchgeführte Kabel und dergleichen gut anpassen kann, um die Rauchgasdichtigkeit zu gewährleisten.

Zudem ist vorgesehen, dass die Dichtelemente, Dichtkörper, Dichtlamellen oder Dichtlippen aus schwer entflammbarem oder nicht brennbarem Werkstoff bestehen.

Vorzugsweise ist vorgesehen, dass die Hülse an ihrem zweiten Endbereich einen nach radial außen gerundet verlaufenden Kragen aufweist.

Durch diese Abbildung ist am zweiten Endbereich der Hülse keine scharfe Kante gebildet, sondern ein nach außen gerundeter Kragen gebildet.
Dies ist eine Hilfestellung für eine Kabeleinführung, wenn nämlich ein Kabel, welches orthogonal durch die entsprechende Lochung der Wand geführt ist, hinter der Wand beispielsweise rechtwinklig abgebogen werden soll oder abgebogen ist, um die entsprechende Verlegung zu erreichen. Hierbei legt sich das Kabel dann an dem gerundeten Kragen an, was sowohl für die Installation vorteilhaft ist, als auch unschädlich für mögliche Verletzungen des Kabelmantels, da dieser nicht an einer scharfen Kante der Hülse reibt.

In Anlehnung an die üblichen Durchmesser von Hohlwanddosen ist vorzugsweise vorgesehen, dass der Durchmesser der Hülse 68 oder 74 mm beträgt. Unter Umständen kann auch vorgesehen sein, dass die die Hülse bildenden Teile über Materialbrücken miteinander zueinander schwenkbar verbunden sind.

Hierbei sind beispielsweise zwei halbschalenförmige Teile, die die Hülse bilden, an einem jeweiligen Endbereich über eine Materialbrücke miteinander verbunden, so dass sie in aufgeschwenkter Lage das Einlegen von Kabeln oder dergleichen ermöglichen und in zusammengeschwenkter Lage eine geschlossene Hülse bilden.

Hierbei ist insbesondere vorgesehen, dass die Materialbrücken aus elastischem, vorzugsweise elastomerem Material bestehen.

Auch kann vorgesehen sein, dass die durch Längsteilung gebildeten Einzelteile an einer Teilungsfuge durch mindestens eine Materialbrücke zueinander schwenkbar verbunden sind.

Beispielsweise kann an einer Teilungsfuge der Einzelteile die entsprechende Materialbrücke vorgesehen sein, um welche die Einzelteile schwenkbar sind, während an der anderen Teilungsfuge entsprechende Verriegelungselemente angebracht sein können, um Einzelteile aneinander zu verriegeln, wenn sie in die Solllage verbracht sind.

Besonders bevorzugt ist hierbei vorgesehen, dass das Ergänzungsteil innenliegend eine ringförmige Kammer aufweist, in der der Dichtkörper oder die Teile des Dichtkörpers axial unverschieblich gehalten ist oder sind.

Ausführungsbeispiele der Erfindung sind in der Zeichnung dargestellt und im Folgenden näher beschrieben.

Es zeigt:
- Figur 1: eine Ausführungsform in Seitenansicht;
- Figur 2: ein Einzelteil in Draufsicht;
- Figur 3: das Einzelteil von unten gesehen;
- Figur 4: das Einzelteil in Blickrichtung des Pfeiles A der Figur 3 gesehen;
- Figur 5: das Einzelteil in Seitenansicht;
- Figur 6: eine Variante in Seitenansicht in einer Vormontagelage;
- Figur 7: desgleichen aus Figur 6 von unten gesehen in der Vormontagelage;

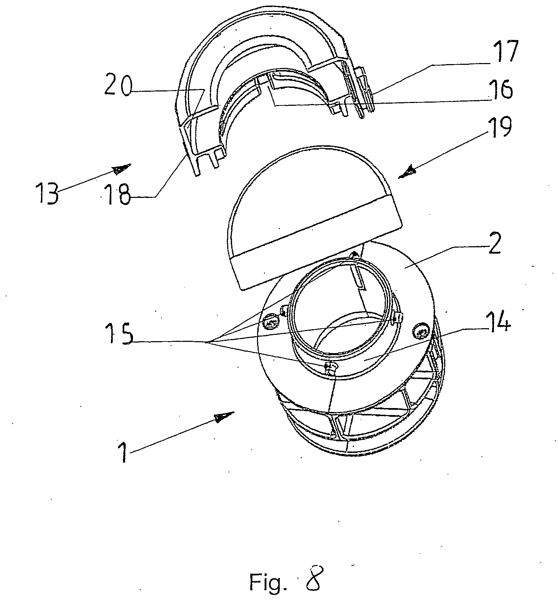

- Figur 8: eine weitere Variante in Vorderansicht.

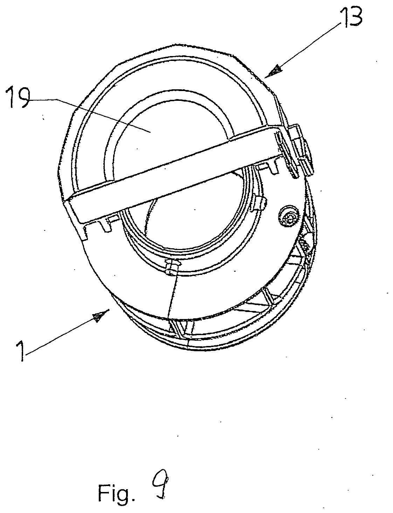

- Figur 9: Teile der erfindungsgemäßen Ausbildung in einer Vormontageposition;
- Figur 10: die Teile gemäß Figur 1 in einer Endmontageposition;
- Figur 11: eine Explosionsdarstellung der Einzelteile;
- Figur 12: die Einzelteile in der Montagesollposition;
- Figur 13: die Einzelteile in einer Lochung einer Brandschutzwand installiert;
- Figur 14: ein Einzelteil der Hülse in unterschiedlichen Ansichten;
- Figur 15: ein Teilstück eines elastischen Dichtelementes in unterschiedlichen Ansichten;

In der Zeichnung ist ein Element zum Einbau in feuerhemmende Wände 12, beispielsweise F-90 Wände, gezeigt. Zum Einbau wird die entsprechende Wand mit einer passenden Lochung zum Einsatz dieses Elementes versehen. Das Element ist als bodenlose Hülse 1 ausgebildet. Zur Installation wird eine entsprechende Hülse 1 in den entsprechenden Wandungsdurchbruch eingesetzt. Die Hülse 1 besteht aus spritzfähigem intumeszierendem Material.

Die Hülse 1 weist an ihrem ersten Endbereich einen Flanschrand 2 auf. Dieser dient als Einstecktiefenbegrenzung, so dass sich die Hülse 1 beim Einbau in die entsprechende Lochung mit dem
Flanschrand 2 an der Wandung 12 neben der Lochung abstützen kann.

An ihrem zweiten Endbereich weist die Hülse 1 einen nach radial außen gerundet verlaufenden Kragen 3 auf. Dieser dient dazu, eine Führung für ein durch die Hülse 1 geführtes und beispielsweise rechtwinklig abgeführtes Kabel zu bilden, welches sich an der gerundeten Fläche des Kragens 3 abstützen kann und an dieser geführt ist.

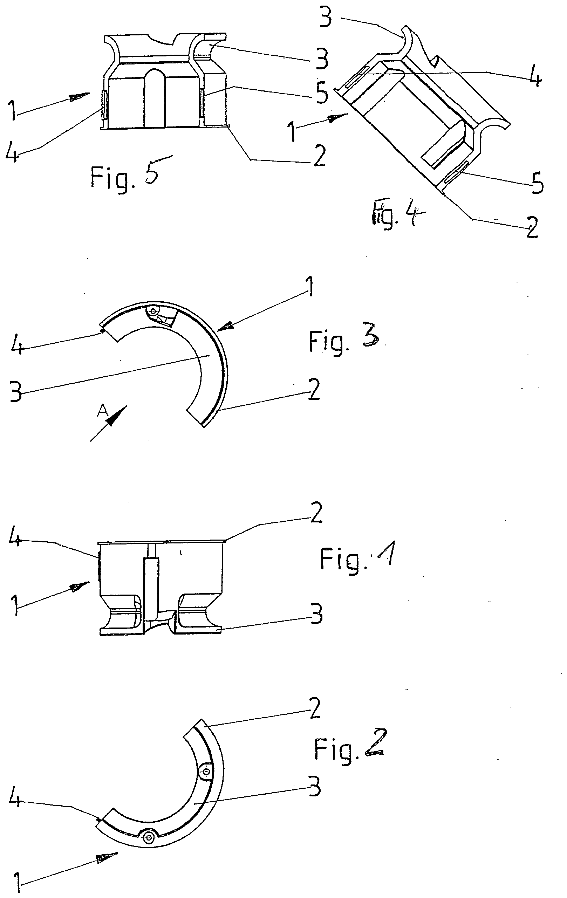

Bei der Ausführungsform nach Figur 1 bis 5 ist die Hülse 1 längsgeteilt. In der Zeichnung ist nur die eine Halbschale der durch mittige Teilung gebildeten Hülse 1 gezeigt. Hierbei sind an den durch die Längsteilung gebildeten Teilen der Hülse 1 an ihren Kanten Vorsprünge 4 beziehungsweise entsprechende Ausnehmungen 5 ausgebildet, so dass die gleichgestalteten Teile zusammengesetzt werden können um eine Hülse 1 zu bilden, wobei dann die Vorsprünge 4 in entsprechende Ausnehmungen 5 des Gegenstückes greifen. Anstelle der durch Vorsprünge 4 und Ausnehmungen 5 gebildeten Sicherungselemente können auch andere Sicherungselemente, beispielsweise rastbare Sicherungselemente oder Schubverbindungselemente an diesen Kanten vorgesehen sein.

Bei allen Ausführungsformen beträgt der Durchmesser der Hülse 1 vorzugsweise 68 oder 74 mm, weil dieses Maß dem üblichen Maß von Hohlwanddosen entspricht. Hierdurch ist es für den Benutzer in einfacher Weise möglich, mittels der üblichen Werkzeuge, die er zum Einbau von Hohlwanddosen zur Verfügung hat, die Wandungsdurchbrüche zu schaffen, in die die Hülse 1 eingesetzt werden kann.

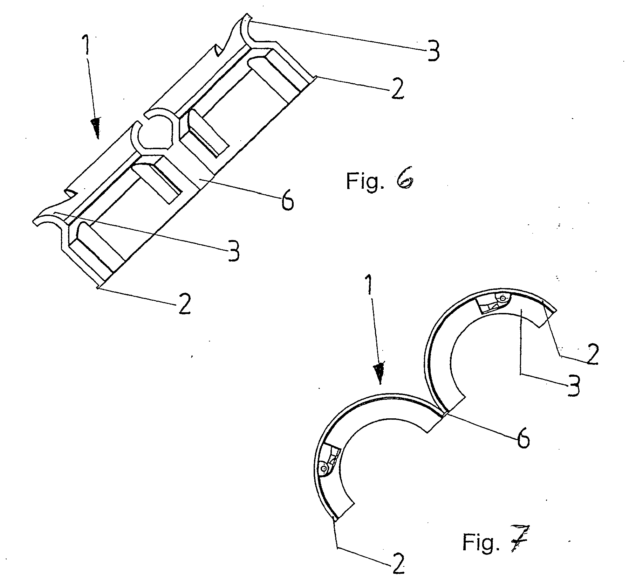

Bei der Ausführungsform nach Figur 6 und 7 sind die die Hülse 1 bildenden Teile über eine Materialbrücke 6 miteinander schwenkbar verbunden. In der in der Zeichnung dargestellten Lage können Kabel in die Hülse 1 eingebracht werden. Nachfolgend können die Hülsenteile zueinander verschwenkt werden, so dass eine geschlossene Hülse 1 gebildet ist, wie sie beispielsweise in Figur 1 gezeigt ist.

Die Hülse 1 kann in die entsprechende
Lochung der Wand eingesetzt werden und es können Kabel oder andere Elemente durch die Hülse 1 hindurch installiert werden.

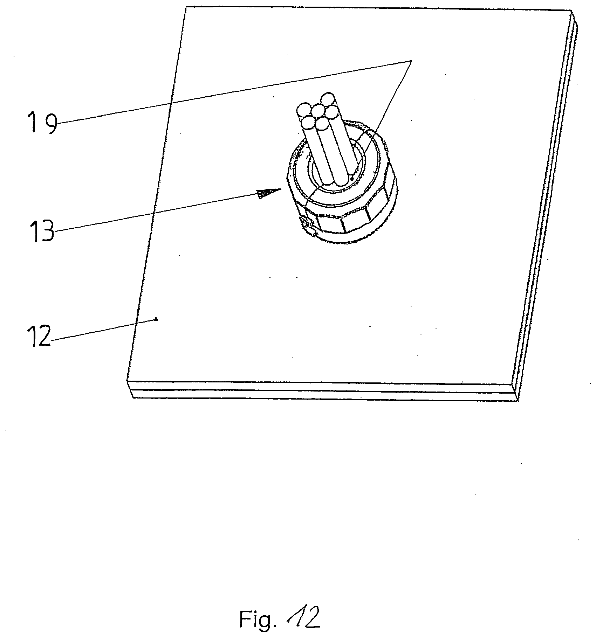

In der Zeichnung ist ferner eine Installationsdose oder Hohlwanddose gezeigt, die zum Einbau in feuerhemmende Wände 12 geeignet und bestimmt ist, wobei die Wand 12 eine passende Lochung zum Einsatz der Dose aufweist. Die Dose ist als bodenlose Hülse 1 ausgebildet, die mündungsseitig einen Flanschrand 2 aufweist, der in der Einbausollposition gemäß Figur 12 außenseitig der entsprechenden Wandung 12 anliegt und sich dort abstützt. Dieser Flanschrand dient als Widerlager für die Befestigung der Hülse 1, beispielsweise mittels Klemmelementen, wie sie bei Hohlwanddosen üblich sind. Vom Flanschrand 2 ragt in der Montagesollposition ein Ergänzungsteil 13 ab, mittels dessen durch die Hülse 1 geführte Kabel oder dergleichen Teile rauchgasdicht umfasst sind, wie insbesondere aus der Darstellung gemäß Figur 12 ersichtlich ist.

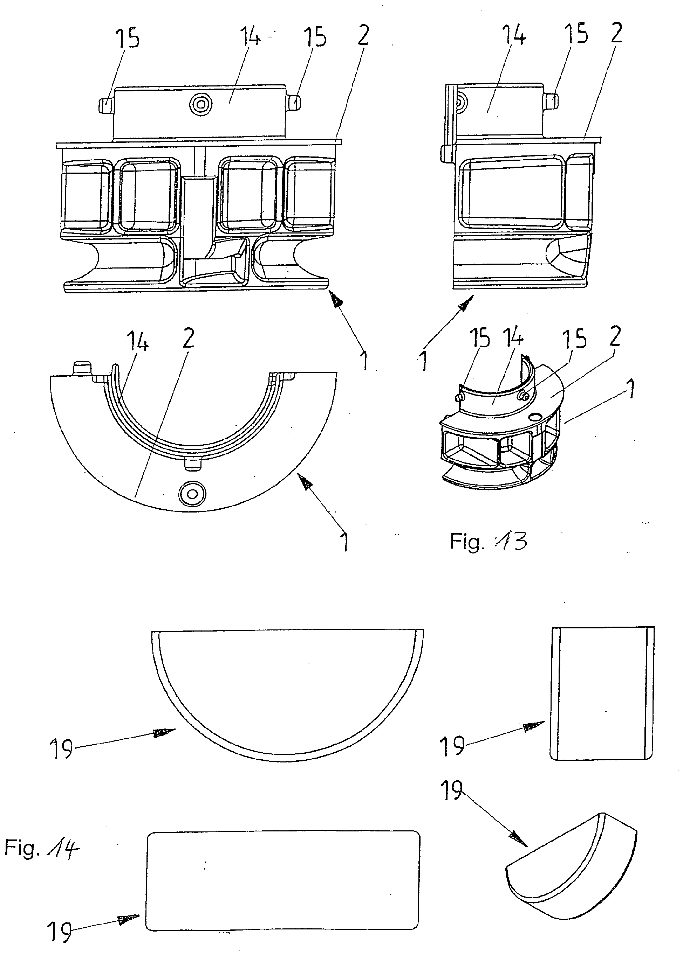

Das Ergänzungsteil 13 liegt also in der Montagesollposition vor der Wandfläche der feuerhemmenden Wand 12. Das Ergänzungsteil 13 ist lösbar an der Hülse 1 befestigt, wobei die Hülse 1 einen vom Flanschrand 2 axial abragenden Stutzen 14 aufweist, auf den das Ergänzungsteil 13 mit einer entsprechenden Kontur aufsteckbar ist. Im Ausführungsbeispiel sind am Stutzen 14 und an mit diesem zusammenwirkenden Teilen des Ergänzungsteils 13 einen Bajonettverschluss bildende Teile, nämlich Zapfen 15 und Führungs- bzw. Haltenuten 16 ausgebildet. Die Haltenuten 16 münden über Führungsnuten axial aus dem Ergänzungsteil in Richtung auf die Hülse 1 heraus, während die Haltenuten in Umfangsrichtung verlaufen und vorzugsweise leicht geschrägt sind, so dass sie Anzugsflächen bilden, sofern sie mit den Zapfen 15 zusammenwirken. Die Hülse 1 ist längs geteilt, so dass sich zwei halbschalenförmige Einzelteile ergeben, von denen eines beispielsweise in Figur 13 in unterschiedlichen Ansichten gezeigt ist.

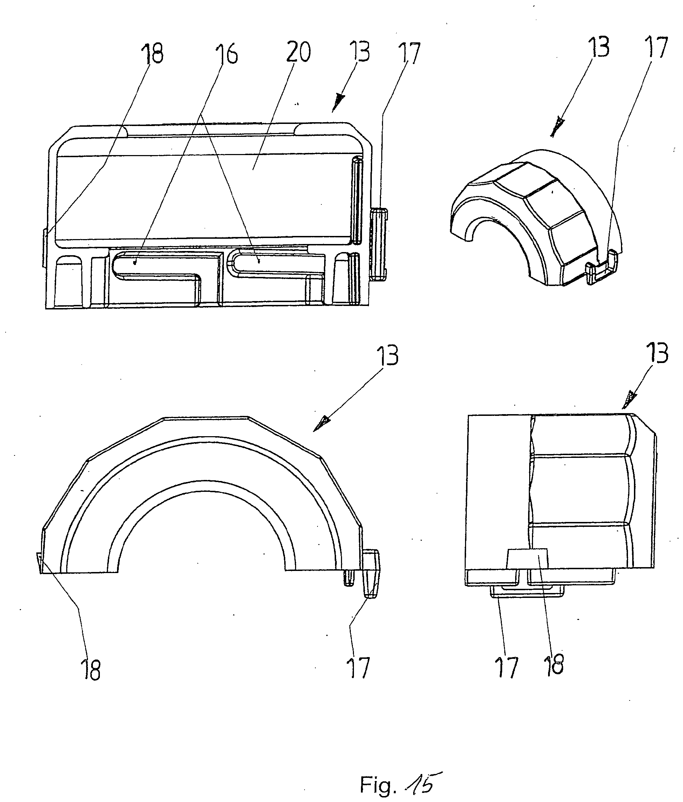

Auch das Ergänzungsteil 13 ist längs geteilt. Eines dieser halbschalenförmigen Teile, welches durch die Längsteilung gebildet ist, ist in Figur 15 dargestellt. Um die Teile ordnungsgemäß zusammenbauen zu können, ist bei der Hülse 1 an der durch Längsteilung gebildeten Randkante jeweils ein Vorsprung bzw. eine Lochung gebildet, die in Montagesolllage ineinander greifen. Auch die Einzelteile, die das Ergänzungsteil 13 bildet, weisen an ihrer Teilungsfuge Verriegelungselemente 17, 18 auf, die in Montagesollposition ineinander greifen und den Zusammenhalt der Teile gewährleisten.

Vorzugsweise ist das Ergänzungsteil 13 ein rohrähnliches Formteil aus im Wesentlichen formstabilen Werkstoff, insbesondere Kunststoff. In dessen Innenraum sind elastische Dichtelemente 19 angeordnet und gehalten. Alternativ können solche Dichtelemente auch am Innenmantel angeformt sein. In der Montagesollposition verschließen die Dichtelemente 19 den Querschnitt des das Ergänzungsteil 13 bildenden Formteils dicht.

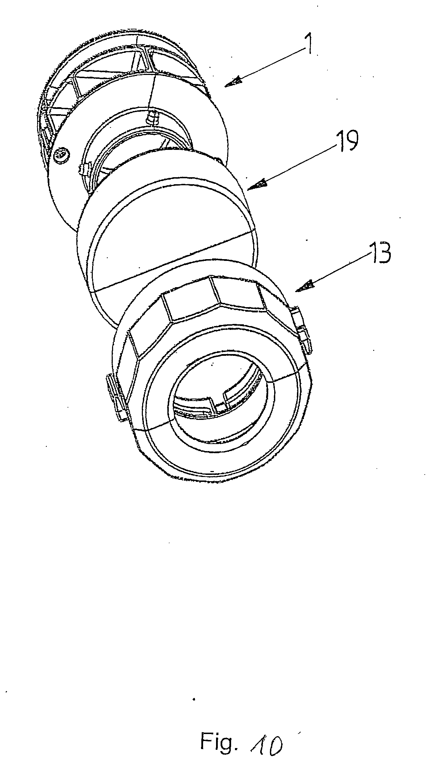

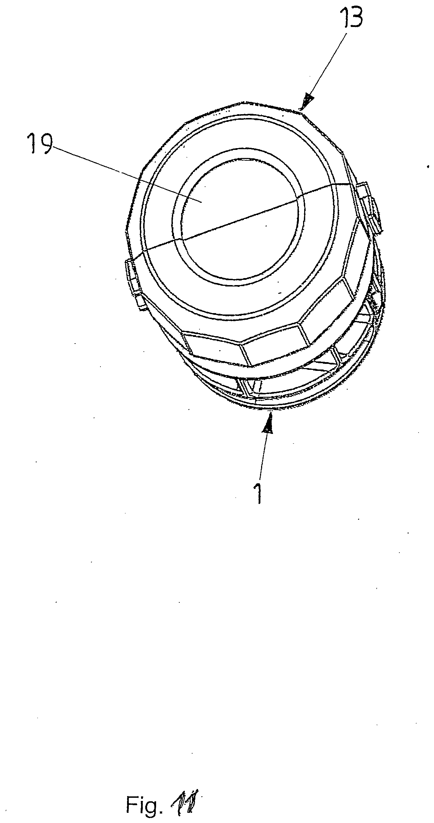

Das Ergänzungsteil 13 besteht insbesondere aus zwei halbschalenartigen Rohrabschnitten, die zu einem rohrartigen Formteil zusammengesetzt sind. Jeder halbschalenartige Rohrabschnitt weist innenliegend entsprechende elastische Dichtelemente 19 auf, die sich bei zusammengefügten Rohrabschnitten zu einer Dichtscheibe ergänzen. Im Ausführungsbeispiel weist das Ergänzungsteil 13 innenliegend einen radial geteilten elastisch verformbaren Dichtkörper 19 auf, wie insbesondere in Figur 10 und 11 ersichtlich ist. Dieser ist in Montagesolllage unverlierbar am Ergänzungsteil 13 gehalten. Hierzu weist das Ergänzungsteil 13 vorzugsweise innenliegend eine ringförmige Kammer 20 auf, in der Teile des Dichtkörpers 19 axial unverschieblich gehalten sind. Der Dichtkörper 19 besteht vorzugsweise aus schwer entflammbarem oder nicht brennbarem Werkstoff.

Zur Montage der Elemente kann zunächst ein Kabelstrang durch die entsprechende Lochung der feuerhemmenden Wand 12 geführt werden. Anschließend kann die Hülse 1, die aus zwei Halbschalen gebildet ist, radial auf den Kabelstrang aufgesetzt und axial in die Lochung der Wand 12 eingeführt werden und an dieser fixiert werden. Nachfolgend können dann die beiden Halbschalen, die das Ergänzungsteil 13 bilden, mit den darin montierten halbschalenförmigen Dichtkörpern 19 radial auf den Kabelmantel aufgesetzt und zusammengedrückt werden. Anschließend wird diese vormontierte Einheit in Richtung auf die Hülse verschoben und an der Hülse 1 befestigt, beispielsweise durch das Zusammenwirken der Zapfen 15 mit den Verschlusskonturen 16. Die Endmontagesituation ist in Figur 12 gezeigt. Aufgrund der Elastizität des Dichtkörpers 19 schmiegt sich dieser eng an den durchgeführten Kabelstrang an und ebenso an die Innenwandung des Ergänzungsteiles 13. Es ist hiermit eine einfache Montage ermöglicht, wobei im Ergebnis eine rauchgasdichte Anordnung der Elemente erreicht wird.

## Patentansprüche

1. Elektrische Installationsdose oder Hohlwanddose zum Einbau in Wände, vorzugsweise feuerhemmende Wände, insbesondere F-90 Wände, wobei die Wand eine passende Lochung zum Einsatz der Dose aufweist, die Dose mündungsseitig an ihrem ersten Endbereich einen Flanschrand aufweist, der in Montagesolllage außen an der Wand anliegt, sowie Befestigungsmittel zur Fixierung an der Wand in Montagesolllage, wobei die Dose als bodenlose Hülse (1) ausgebildet ist, die Hülse (1) mündungsseitig ein Ergänzungsteil (13) aufweist, mittels dessen durch die Hülse (1) geführte Kabel oder dergleichen Teile rauchgasdicht umfasst sind, das Ergänzungsteil (13) lösbar an der Hülse (1) befestigt ist und das Ergänzungsteil (13) längsgeteilt ist, wobei die durch Längsteilung gebildeten Einzelteile des Ergänzungsteils (13) miteinander lösbar verriegelbar oder verriegelt sind, wobei das Ergänzungsteil (13) ein rohrähnliches Formteil aus im wesentlichen formstabilen Werkstoff, insbesondere Kunststoff ist, in dessen Innenraum elastische Dichtelemente (19) angeordnet oder am Innenmantel angeformt sind, die den Querschnitt des Formteils dichtend verschließen, wobei das Ergänzungsteil (13) innenliegend mindestens einen radial geteilten elastisch verformbaren Dichtkörper (19) umfasst, der in Montagesollage unverlierbar am Ergänzungsteil (13) gehalten ist, **dadurch gekennzeichnet, dass** die Hülse (1) aus intumeszierendem Material besteht, dass die Hülse (1) längsgeteilt ist, dass die durch die Längsteilung gebildeten Teile der Hülse (1) an ihren Kanten Vorsprünge (4) oder Vertiefungen (5) oder Teile, die zur steckbaren, rastbaren oder schubverbindbaren Verbindung der Teile geeignet sind, aufweist, dass das Ergänzungsteil (13) axial vom Flanschrand (2) abragt oder über den Flanschrand (2) vorragt, dass die Hülse (1) einen vom Flanschrand (2) abragenden Stutzen (14) aufweist, auf den das Ergänzungsteil (13) aufsteckbar oder aufgesteckt ist, dass am Stutzen (14) und an mit diesem zusammenwirkenden Teilen des Ergänzungsteils (13) einen Bajonettverschluss bildende Teile, nämlich Zapfen (15) und Führungs- sowie Haltenuten (16) ausgebildet sind, und dass die Dichtelemente, Dichtkörper (19), Dichtlamellen oder Dichtlippen aus schwer entflammbarem oder nicht brennbarem Werkstoff bestehen.

2. Installationsdose nach Anspruch 1, **dadurch gekennzeichnet, dass** die Hülse (1) an ihrem zweiten Endbereich einen nach radial außen gerundet verlaufenden Kragen (3) aufweist.

3. Installationsdose nach Anspruch 1 oder 2, **dadurch gekennzeichnet, dass** der Durchmesser der Hülse (1) 68 oder 74 mm beträgt.

4. Installationsdose nach einem der Ansprüche 1 bis 3, **dadurch gekennzeichnet, dass** die die Hülse (1) bildenden Teile über Materialbrücken (6) miteinander zueinander schwenkbar verbunden sind.

5. Installationsdose nach Anspruch 4, **dadurch gekennzeichnet, dass** die Materialbrücken (6) aus elastischem, elastomerem Material bestehen.

6. Installationsdose nach einem der Ansprüche 1 bis 5, **dadurch gekennzeichnet, dass** das Ergänzungsteil (13) innenliegend eine ringförmige Kammer (20) aufweist, in der der Dichtkörper (19) oder die Teile des Dichtkörpers (19) axial unverschieblich gehalten ist oder sind.

## Claims

1. An electrical installation box or cavity-wall box for in-wall mounting, preferably in fire-resistant walls, in particular F-90 walls, the wall including a matching hole for insertion of the box, the box including, at its mouth at its first end section, a flange edge that, in the intended mounting position, externally abutting the wall, and fastening means for attachment at the wall, in the intended mounting position, the box being configured as a bottomless sleeve (1), the sleeve (1) including, at its mouth, a supplementary part (13), by means of which cables or like parts fed through the sleeve (1) are enclosed in a flue gastight manner, the supplementary part (13) being releasably attached at the sleeve (1), and the supplementary part (13) being divided along its longitudinal direction, the individual parts of the supplementary part (13) formed by the longitudinal division being releasably lockable or locked, the supplementary part (13) being a tubelike shaped part of a substantially dimensionally stable material, in particular a plastic material, in the interior of which resilient sealing elements (19) are arranged or are integrally joined at the inner surface that sealingly close the cross-section of the shaped part, the supplementary part (13) comprising, in its interior, at least one radially divided resilient deformable sealing body (19) that, in the intended mounting position, is captively held at the supplementary part (13), **characterized by that** the sleeve (1) is made of an intumescent material, that the sleeve (1) is divided in its longitudinal direction, that the parts of the sleeve (1) formed by the longitudinal division comprise, at their edges, projections (4) or depressions (5) or parts that are suitable for pluggable, latchable, or insertable connection of the parts, that the supplementary part (13) axially projects from the flange edge (2) or extends beyond the flange edge (2), that the sleeve (1) comprises a connecting piece (14) projecting from the flange edge (2), onto which the supplementary part (13) is fittable or is fitted, that, at the connecting piece (14) and at parts of the supplementary parts (13) cooperating therewith, parts forming a bayonet mount, namely pin (15) and guiding and holding grooves (16), are formed, and that the sealing elements, sealing bodies (19), sealing lamellae, or sealing lips consist of a flame-resistant or not flammable material.

2. The installation box of claim 1, **characterized by that** the sleeve (1) comprises, at its second end section, a rounded collar (3) extending radially towards outside.

3. The installation box of claim 1 or 2, **characterized by that** the diameter of the sleeve (1) is 68 or 74 mm.

4. The installation box of one of claims 1 to 3, **characterized by that** the parts forming the sleeve (1) are pivotally connected to each other through material bridges (6).

5. The installation box of claim 4, **characterized by that** the material bridges (6) are made of a resilient, elastomeric material.

6. The installation box of one of claims 1 to 5, **characterized by that** the supplementary part (13) comprises, in its interior, a ring-shaped chamber (20), in which the sealing body (19) or the parts of the sealing body (19) is or are held in an axially undisplaceable manner.

## Revendications

1. Boîte d'installation électrique ou boîte électrique pour parois creuses pour montage dans des parois, de préférence des parois résistantes au feu, en particulier des parois coupe-feu F-90, la paroi comportant un trou adapté pour l'insertion de la boîte, la boîte comportant, à son embouchure à sa première section d'extrémité, un bord de bride qui dans la position de montage de consigne est extérieurement en appui sur la paroi, et des moyens de fixation pour fixation à la paroi, dans la position de montage de consigne, la boîte étant configurée comme douille (1) sans fond, la douille (1) comportant, à son embouchure, une pièce supplémentaire (13), au moyen de laquelle des câbles ou des pièces semblables insérés à travers la douille (1) sont entourés de façon étanche aux gaz de combustion, la pièce supplémentaire (13) étant fixée de façon amovible à la douille (1) et la pièce supplémentaire (13) étant divisée selon sa direction longitudinale, les parties individuelles de la pièce supplémentaire (13) formées par la division longitudinale étant arrêtables ou arrêtées de façon amovible, la pièce supplémentaire (13) étant une pièce en forme de tuyau en un matériau essentiellement dimensionnellement stable, en particulier un matériau plastique, dans l'intérieur de laquelle des éléments d'étanchéité (19) élastiques sont arrangés ou sont surmoulés à la surface intérieure, qui ferment la section en coupe de la pièce formée de façon étanche, la pièce supplémentaire (13) comportant, dans son intérieur, au moins un corps d'étanchéité (19) élastiquement déformable et radialement divisé qui, dans la position de montage de consigne, est retenu captive à la pièce supplémentaire (13), **caractérisée en ce que** la douille (1) est en un matériau intumescent, que la douille (1) est divisée dans sa direction longitudinale, que les parties de la douille (1) formées par la division longitudinale comprennent, à leurs bords, des saillies (4) ou des encoches (5) ou des parties qui sont propres à une connexion enfichable, encliquetable ou insérable des parties, que la pièce supplémentaire (13) fait saillie axialement du bord de bride (2) ou s'étend au-delà du bord de bride (2), que la douille (1) comporte un embout (14) faisant saillie du bord de bride (2), sur lequel la pièce supplémentaire (13) est enfichable ou est enfichée, que, à l'embout (14) et à des parties de la pièce supplémentaire (13) co-opérant avec celui-ci, des parties formant une fixation baïonnette, c'est-à-dire tenon (15) et rainures de guidage et retenue (16), sont formées, et que les éléments d'étanchéité, corps d'étanchéité (19), lamelles d'étanchéité ou lèvres d'étanchéité consistent en un matériau résistant au feu ou non inflammable.

2. Boîte d'installation selon la revendication 1, **caractérisée en ce que** la douille (1) comporte, à sa deuxième section d'extrémité, un col arrondi (3) s'étendant radialement vers l'extérieur.

3. Boîte d'installation selon la revendication 1 ou 2, **caractérisée en ce que** le diamètre de la douille (1) est de 68 ou 74 mm.

4. Boîte d'installation selon une des revendications 1 à 3, **caractérisée en ce que** les parties formant la douille (1) sont reliées chacune à articulation par des ponts de matière (6).

5. Boîte d'installation selon la revendication 4, **caractérisée en ce que** les ponts de matière (6) sont en un matériau élastique, élastomérique.

6. Boîte d'installation selon une des revendications 1 à 5, **caractérisée en ce que** la pièce supplémentaire (13) comporte, dans son intérieur, une chambre annulaire (20), dans laquelle le corps d'étanchéité (19) ou les parties du corps d'étanchéité (19) est retenu ou sont retenues de façon non déplaçable axialement.
